# EUROPÄISCHE PATENTSCHRIFT

(11) **EP 1 123 006 B1**
(45) Veröffentlichungstag und Bekanntmachung des Hinweises auf die Patenterteilung: **16.07.2003**
(21) Anmeldenummer: 99953864.8
(22) Anmeldetag: 16.10.1999
(51) Int. Cl.: A22C 21/00

(54) **FILETIERVORRICHTUNG**
FILLETING DEVICE
DISPOSITIF POUR ENLEVER DES FILETS

(30) Priorität: 21.10.1998 DE 19848498
(43) Veröffentlichungstag der Anmeldung: 16.08.2001
(73) Patentinhaber: NORDISCHER MASCHINENBAU RUD. BAADER GMBH + CO KG, 23560 Lübeck (DE)
(72) Erfinder: EVERS, Reinhard, D-23617 Stockelsdorf (DE); DIESING, Karl-Heinz, D-23558 Lübeck (DE); LANDT, Andreas, D-23554 Lübeck (DE); TORKLER, Conrad, D-23883 Klein Zecher (DE)
(74) Vertreter: Patentanwälte Wenzel & Kalkoff
(86) Internationale Anmeldenummer: EP9907867
(87) Internationale Veröffentlichungsnummer: WO00022933

(56) Entgegenhaltungen:
- EP-A- 0 168 865
- EP-A- 0 207 553
- EP-A- 0 336 162
- EP-A- 0 591 741
- EP-A- 0 771 530
- DD-A- 234 785

## Beschreibung

Die Erfindung betrifft eine Vorrichtung sowie ein Verfahren zum Entfernen der Filets von den aus genommenen Körpern extremitätenlosen Geflügels.

Aus der EP A1 168 865 ist eine derartige Einrichtung bekannt, die auf das Entfernen des Kopfteils des Gabelbeins (clavicula) gerichtet ist, wobei dieser Vorgang aber einem Filetierprozeß vorgelagert ist, dessen Ergebnis ein das Brustfleisch in Form eines die Außen- und Innenfilets umfassendes Doppelfilet ist. Bei dieser Einrichtung werden die als Vorderhälften vorliegenden Geflügelkörper auf den Sätteln eines umlaufend angetriebenen Förderers aufgesattelt, so daß das Sattelhorn in die Halsöffnung ragt und das Brustteil nach oben weist. Das Filetieren des mit der Halsöffnung voraus geförderten Geflügelkörpers erfolgt im Untertrum der Einrichtung und beginnt mit dem Rückhalten des Brustfleisches und damit dem Abstreifen desselben von dem Gabelbein bis zum Brustbein (sternum) und wird fortgesetzt durch ein Schabewerkzeug, welches der Form des Geflügelkörpers angepaßt ist und durch Eindringen zwischen Skelett und Fleisch das Abtrennen des Fleisches bis an den Kamm des Brustbeins (crista sterni) heran bewirkt . Mittels dann folgender Schabefinger erfolgt das Ablösen von den Flanken des Brustbeins in dessen Übergangsbereich zur Brustbeinplatte (corpus sterni) und schließlich das vollständige Abtrennen des Doppelfilets mittels umlaufend angetriebener Schälgurte. Ein weiteres Ausführungsbeispiel dieses Standes der Technik sieht als erstes Filetierwerkzeug ein Paar Fräswalzen vor, die das im Bereich der Rippen befindliche Filetfleisch von dem Skelett abheben. Diesem Werkzeug ist ein Schabewerkzeug nach Art des oben beschriebenen nachgeschaltet, das das Abtrennen des Fleisches bis an den Kamm des Brustbeins heran bewirkt. Das vollständige Abtrennen des Doppelfilets übernimmt schließlich wiederum ein Werkzeug aus umlaufend angetriebenen Schälgurten.

Aus der EP-A1 207 553 ist eine weitere Einrichtung zum Gewinnen des Fleisches von Geflügelkörpem in Form von Doppelfilets bekannt. Ausgangsprodukt ist auch hier die Vorderhälfte eines Geflügelkörpers, welcher auf das Sattelhom eines Sattels gestülpt wird, der Bestandteil eines umlaufenden Förderers ist. Beim Aufstülpen werden die Flügeigelenke und damit die Ansatzpunkte des Gabelbeins nach innen gedrängt gehalten und der Geflügelkörper so den Filetwerkzeugen zugeleitet, die längs des Untertrums des Förderers angeordnet sind und das Filetfleisch im wesentlichen durch Abschieben gewinnen.

Eine weitere Einrichtung sowie ein Verfahren zum maschinellen Gewinnen von Fleisch von Geflügelkörpern ist dem Dokument EP 591 741 zu entnehmen. Die darin geziegte Einrichtung zum Entfernen der Filets umfaßt mehrere Bearbeitungswerkzeuge. Die als Schabevorrichtungen ausgebildeten Bearbeitungswerkzeuge sind mit einem Steuermechanismus verbunden, durch den die Schabeelemente angesteuert werden, wobei die Ansteuerung bzw. Aktivierungder Werkzeuge jeweils in Abhängigkeit der Größe der zu bearbeitenden Produkte erfolgt.

Alle bekannten Vorrichtungen bzw. Verfahren zur Gewinnung von Filets weisen den Nachteil auf, daß es aufgrund der unterschiedlichen Geometrien der natürlich gewachsenen Körper häufig nicht gelingt, ein Optimum an Filetfleisch bei einem gleichzeitig optisch ansprechenden Produkt zu erhalten.

Aufgabe der vorliegenden Erfindung ist es nun, die Ausbeute an Filetfleisch zu erhöhen, bei gleichzeitig optisch ansprechendem Produkt.

Die Aufgabe wird erfindungsgemäß dadurch gelöst, daß eine Vorrichtung zum Entfernen der Filets von den ausgenommenen Körpern extremitätenlosen Geflügels geschaffen wird, umfassend wenigstens eine Meßvorrichtung zur Erfassung der individuellen Körpermaße, wenigstens eine Steuerungseinheit und wenigstens eine Schabevorrichtung, die dadurch gekennzeichnet ist, daß die Meßvorrichtung über die Steuerungseinheit mit der wenigstens einen Schabevorrichtung zum Zweck der Kommunikation verbunden ist, wobei die Meßvorrichtung zur Erfassung von Körpergelenkpunkte und die oder jede Schabevorrichtung als scheibenförmiges Schabeelement ausgebildet ist. Dadurch wird gewährleistet, daß zum einen exakte Daten der individuellen Körpermaße ermittelbar sind, so daß eine erhöhte Ausbeute erzielt werden kann, da die Angriffs- bzw. Eingriffspunkte der Schabevorrichtung genau bestimmbar sind. Zum anderen gewährleistet die scheibenförmige Ausbildung der oder jeder Schabevorrichtung ein schonendes Eindringen zwischen Skelett und Fleisch, so daß Verletzungen, insbesondere der Knochen, wirksam vermieden werden können. Dadurch ist die Qualität des gewonnenen Filetfleisches verbessert, da beispielsweise Knochenreste im Filet verhindert werden.

In einer vorteilhaften Weiterbildung der Erfindung ist das oder jedes Schabeelement rotierbar ausgebildet Durch die rotierenden Schabeelemente wird das Anlösen bzw. der Anschnitt erleichtert, wodurch einerseits eine Qualitätsverbesserung und andererseits eine Ausbeuteerhöhung erzielt wird.

In einer anderen erfindungsgemäßen Weiterbildung ist vorgesehen, daß wenigstens eine Schabevorrichtung ein Element zum Zurückziehen der Tendersehne aufweist Dies erhöht die Anschnittsicherheit noch weiter und führt zu beschädigungsfreien Filets.

Weiter kann man erfindungsgemäß vorsehen, daß die oder jede Schabevorrichtung wenigstens zwei scheibenförmige Schabeelemente aufweist

Vorzugsweise sind die scheibenförmigen Schabeelemente derart schwenkbar ausgeführt, daß ihre Scheibenumfangsflächen vom Körpergelenk des Geflügelkörpers aus auf dem Gabelbein abrollbar angeordnet sind. Durch diese Ausbildung ist gewährleistet, daß eine saubere Trennung des Filetfleisches vom Skelett erfolgt, so daß die Ausbeute weiter erhöht wird.

Eine erfindungsgemäße Weiterbildung sieht vor, daß in Förderrichtung vor jeder Schabevorrichtung wenigstens eine Meßvorrichtung angeordnet ist.

Weiterhin wird die Aufgabe durch ein Verfahren gelöst, das die folgenden Verfahrensschritte umfaßt:
- Einführen in Vorrichtung zum Entfernen von Filets nach einem der Ansprüche 1 bis 7,
- Erfassen der individuellen Körpermaße durch Aufnehmen körperspezifischer Daten,
- Ansteuern der oder jeder Schabevorrichtung und Aufsetzen von Schabeelementen auf zuvor ermittelte Körpergelenkpunkte,
- anschließendes Anlösen der Filets vom Skelett durch die scheibenförmigen Schabeelemente, und
- endgültiges und vollständiges Lösen der Filets durch nachfolgende Schabewerkzeuge.

Durch dieses erfindungsgemäße Verfahren ist eine exakte Trennung des Fleisches vom Skelett mit maximaler Ausbeute möglich. Des weiteren gewährleistet das erfindungsgemäße Verfahren eine sehr schonende Trennung der Filets vom Skelett, so daß Beschädigungen, durch die beispielsweise Knochenreste im Filet verbleiben, verhindert werden können.

Ein Ausführungsbeispiel der erfindungsgemäßen Vorrichtung wird anhand der Zeichnung näher erläutert. Es zeigt:
Fig. 1 eine abgespeckte Ansicht des Geflügelkörpers
Fig. 2 eine vereinfachte Seitenansicht eines Geflügelkörpers auf einem Sattel mit aktiviertem Klemmhebel
Fig. 3 eine Seitenansicht eine Ausschnitts einer Geflügelverarbeitungsvorrichtung
Fig. 4 eine Draufsicht gemäß Fig. 3.

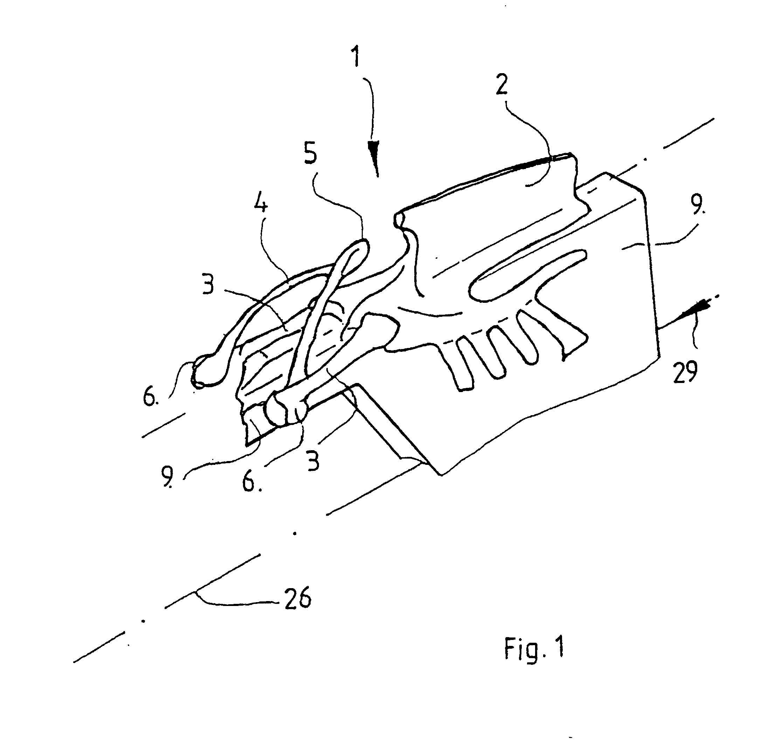

In Fig. 1 wird ein Teil eines Geflügelkörpers 1 anhand seiner Knochenstruktur dargestellt, das im wesentlichen aus einem Brustbein 2 besteht, von dem aus sich die Rabenbeine 3 nach vorne bzw. in Förderrichtung 29 ragen. Das Gabelbein 4, das sich bis hin zum Gabelbeinkopf 5 erstreckt, ist mittels der Körpergelenke 6 mit den Rabenbeinen 3 verbunden. Dieser Geflügelkörper 1 ist auf einen Sattel 9 aufgebracht, der seinerseits in einem nicht näher gezeigten Gestell einer Vorrichtung zum Gewinnen des Brustfleisches von geschlachtetem Geflügel auf einem endlos umlaufenden Förderer 26 befestigt ist. Das Teil des Geflügelkörpers 1, das in der Fig. 1 dargestellt ist, entsteht durch einen Schrägschnitt quer durch den Geflügelkörper 1, wobei der Schnitt unter Abtrennen des Beckens mit den Beinen und unter Durchtrennen der Wirbelsäule etwa parallel zu den mit der Wirbelsäule verbundenen Rippen verläuft.

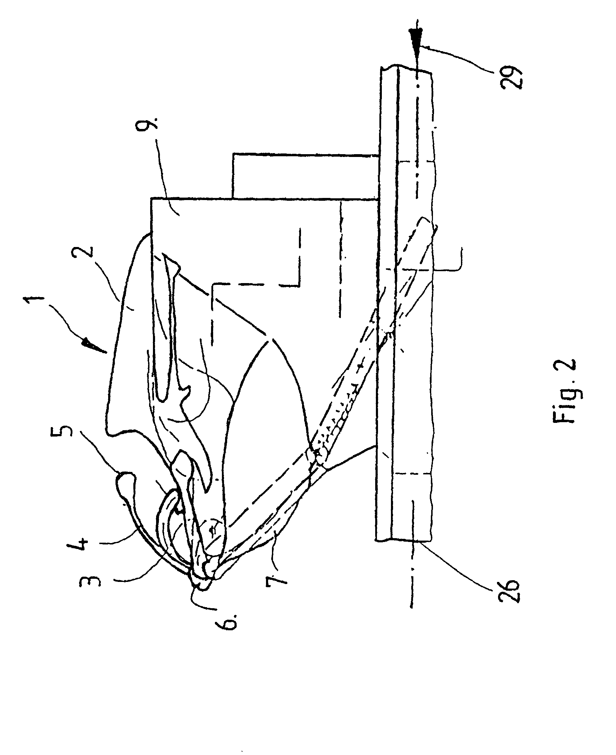

In Figur 2 wird in einer Seitenansicht ein Geflügelkörper 1 auf einem Sattel 9 dargestellt, wobei der Geflügelkörper 1 mittels des aktivierten Klemmhebels 8 gegen den Sattel 9 angedrückt wird. Die Innenkontur der Brustbeinplatte 10 liegt auf dem Sattel 9 auf. Im wesentlichen besteht der Geflügelkörper 1 aus dem Brustbein 2, von dem aus die Rabenbeine 3 in Richtung der Körpergelenke 6 ragen. Das Gabelbein 4, das sich bis hin zum Gabelbeinkopf 5 erstreckt, ist mittels der Körpergelenke 6, an denen auch die Schulterblätter 7 befestigt sind, mit den Rabenbeinen 3 verbunden. Der Geflügelkörper 1 ist auf einen Sattel 9 aufgebracht, der in einem nicht näher gezeigten Gestell einer Vorrichtung zum Gewinnen des Brustfleisches von geschlachtetem Geflügel an einem endlos umlaufenden Förderer 26 befestigt ist.

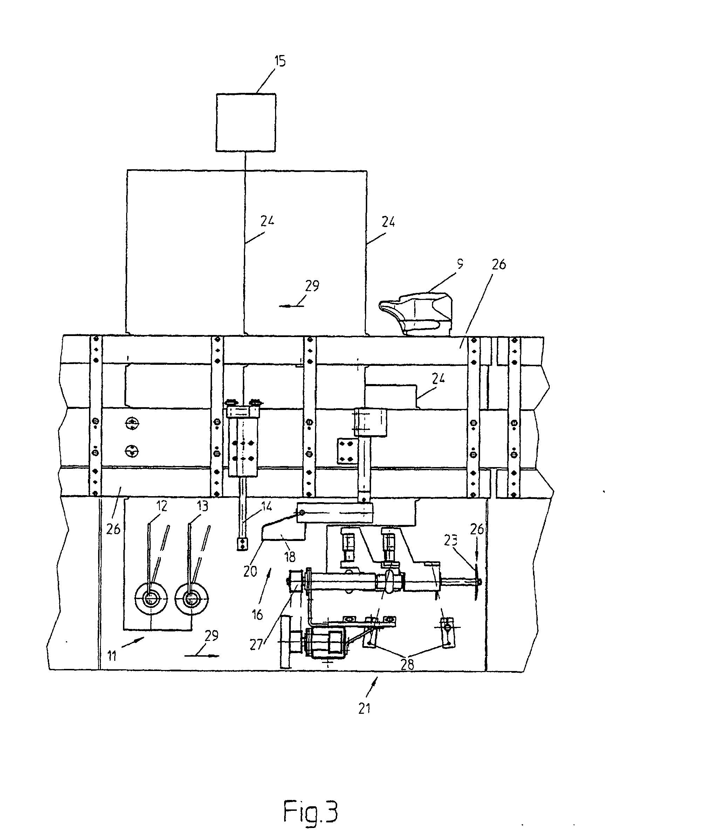

In der Darstellung gemäß Figur 3 ist eine Seitenansicht einer Geflügelverarbeitungsvorrichtung zu sehen, wie sie beispielsweise in der EP 168 865, insbesondere in der dortigen Figur 1 zu sehen ist.

Der nicht dargestellte Geflügelkörper, der sich wie in den Figuren 1 und 2 beschrieben auf den in regelmäßigen Abständen auf dem endlos umlaufenden Förderer 26 angeordneten Sätteln 9 befindet, gelangt mit seiner nach unten weisenden Brustbeinplatte in den Einzugsbereich der Meßvorrichtung 11.

Dies deshalb, da die in der dargestellten Ausführungsform gewählte Anordnung der Vorrichtung zum Entfernen der Filets unterhalb des endlos umlaufenden Förderers 26 angebracht ist. Auf diese Weise fällt das schlußendlich enfernte Filet unterstützt von der Schwerkraft in ein entsprechend unterhalb der Vorrichtung angeordnetes Auffanggefäß. Im Bereich der Meßvorrichtung 11 muß der mittels Förderer 26 bewegte Geflügelkörper nacheinander in Förderrichtung 29 ein erstes Meßelement 12 und ein zweites Meßelement 13 passieren, wobei das Meßelement 12 für die Erkennung des einen Körpergelenkes, das Meßelement 13 für die Erkennung des anderen Körpergelenkes maßgeblich ist. Wie aus Figur 1 zu erkennen ist, sind die Körpergelenke 6 im wesentlichen parallel nebeneinander in einer Ebene angeordnet, so daß sich daraus ergibt, daß die Meßelemente 12 und 13 entsprechend zum Abstand der Körpergelenke 6 spurversetzt montiert sind. Im Anschluß an die Meßelemente 12 und 13 durchläuft der Geflügelkörper ein drittes Meßelement 14, das aus zwei Elementen besteht. Diese zwei Elemente sind in einer Ebene angeordnet und ähneln einer zweiflügeligen Schwingtür. Die von den soeben beschriebenen Meßelementen individuell gewonnenen Signale bezüglich der jeweiligen Abmaße der Geflügelkörper werden direkt an eine Steuerungseinheit 15 mittels der Signalleitungen 24 weitergeleitet und dienen im wesentlichen der individuellen Identifizierung der Position der Körpergelenke eines jeden einzelnen Geflügelkörpers, der mittels Förderer 26 in den Bereich der Vorrichtung zur Gewinnung des Filets gelangt. Es ist aber auch mit der dargestellten Vorrichtung möglich, Aussagen hinsichtlich der Höhe, der Breite und der Länge des Geflügelkörpers zu machen. Die Steuerungseinheit 15 meldet nun das Ankommen eines jeden Geflügelkörpers, insbesondere aber die Position der Körpergelenke 6 des jeweiligen Geflügelkörpers an die erste Schabevorrichtung 16. Diese Schabevorrichtung 16 besteht aus einem linken Schabeelement 17 und einem rechten Schabeelement 18, wobei diese nebeneinander angeordnete Schabelemente 17, 18 aus der Sicht des herannahenden Geflügelkörpers dessen Körperkontur im wesentlichen nachbilden. Die Schabelemente 17, 18 sind gegeneinander verschwenkbar angeordnet, so daß sie z. B. mittels eines von der Steuerungseinheit 15 stammenden Signals bezüglich der individuellen Breite des Geflügelkörpers diesbezüglich beabstandet werden können. Das linke Schabeelement 17 verfügt über einen linken Sehnenrückhalter 19, der die im Bereich des Körpergelenks befindliche Tendersehne auffinden und zurückhalten soll, damit das Schabelement ungehindert in den Bereich zwischen Knochen und Fleisch gelangen und somit ein Optimum an Ausbeute erzielen kann. Das rechte Schabeelement 18 verfügt über einen rechten Sehnenrückhalter 20, der die entsprechende, gegenüberliegenden Körpergelenk befindliche Tendersehne auffinden soll. Im Anschluß an die erste Schabevorrichtung befindet sich eine zweite Schabevorrichtung 21, die im wesentlichen zur Förderrichtung symmetrisch angeordnet eine linke Scheibe 22 und eine rechte Scheibe 23, die vorzugsweise aus Metall sind, aufweist, wobei diese Scheiben 22, 23 mittels eines Scheibenantriebs 27 antreibbar ausgestaltet sind. Diese Scheiben 22, 23 sind mittels Scheibenschwenkhebel 28 in der Weise verschieblich, daß sie in dem Moment, in dem die Steuereinheit 15 über die Signalleitungen 24 das Erscheinen der Körpergelenke 6 des Geflügelkörpers im Wirkungsbereich der zweiten Schabevorrichtung meldet, sich die Scheibenumfangsfläche 26 der Scheiben 22, 23 auf das korrespondierende Körpergelenk zu bewegt und auf diesem anliegt. Im Verlauf der durch den Förderer 25 verursachten Bewegung des Geflügelkörpers bewegen sich die Scheiben 22, 23 auf dem korrespondierenden Teil des symmetrischen Gabelbeins 4 auf dessen Gabelbeinkopf 5 zu, um das mit dem Gabelbein 4 verbundene Fleisch zu lösen. Die sich drehenden Scheiben 22, 23 werden nach Erreichen des Gabelbeinkopfes wieder aus dem direkten Bereich des Geflügelkörpers ausgesteuert. In einer speziellen Ausgestaltung sind die Scheiben 22, 23, insbesondere im Bereich ihrer Scheibenumfangsfläche 26 stumpf.

In einer weiteren alternativen Ausgestaltung ist vorgesehen, daß im Bereich zwischen erster Schabevorrichtung 16 und zweiter Schabevorrichtung 21 eine weitere Meßvorrichtung 11 angeordnet ist, um die nach einem Bearbeitungsvorgang möglicherweise veränderten Körperkoordinaten zu überprüfen.

In einer anderen alternativen Ausgestaltung ist vorgesehen, daß die bereits weiter oben beschriebenen Schabevorrichtungen 16, 21 in umgekehrter Reihenfolge angeordnet sind, so daß der Geflügelkörper zunächst die Schabevorrichtung 21 und dann die Schabevorrichtung 16 durchläuft, wobei auch hierbei die zusätzliche Alternative denkbar ist, daß zwischen den Schabevorrichtungen 21, 16 eine weitere Meßvorrichtung angeordnet wird..

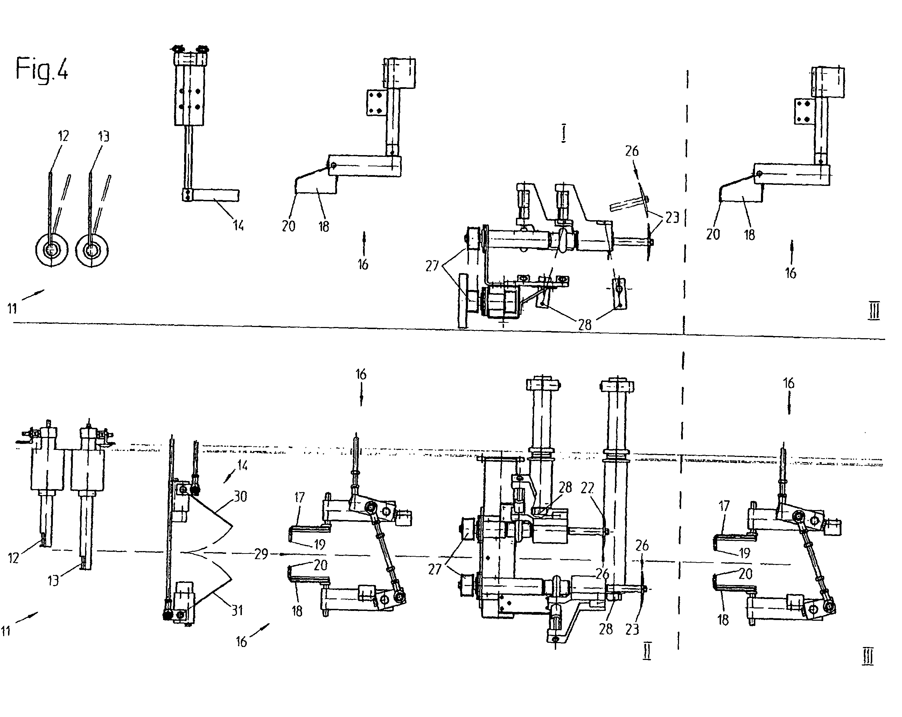

In der Darstellung gemäß Figur 4 ist eine Seitenansicht und eine Draufsicht einer Geflügelverarbeitungsvorrichtung gemäß Figur 3 zu sehen. Im Bereich der Meßvorrichtung 11 muß der mittels des in Figur 3 dargestellten Förderers 26 bewegte Geflügelkörper nacheinander in Förderrichtung 29 ein erstes Meßelement 12 und ein zweites Meßelement 13 passieren, wobei das Meßelement 12 für die Erkennung des einen Körpergelenkes 6, das Meßelement 13 für die Erkennung des anderen Körpergelenkes 6, die in Figur 1 dargestellt sind, maßgeblich ist. Wie aus Figur 1 zu erkennen ist, sind die Körpergelenke 6 im wesentlichen parallel nebeneinander in einer Ebene angeordnet, so daß sich daraus ergibt, daß die Meßelemente 12 und 13 entsprechend zum Abstand der Körpergelenke 6 spurversetzt montiert sind, was insbesondere in Figur 4 II zu sehen ist. Im Anschluß an die Meßelemente 12 und 13 durchläuft der Geflügelkörper ein drittes Meßelement 14, das aus zwei Elementen besteht, dem linken Element 30 und dem rechten Element 31. Diese zwei Elemente sind in einer Ebene angeordnet und ähnein einer zweiflügeligen Schwingtür. Die von den soeben beschriebenen Meßelementen individuell gewonnenen Signale bezüglich der jeweiligen Abmaße der Geflügelkörper werden direkt an eine Steuerungseinheit 15 mittels der in Figur 3 dargestellten Signalleitungen 24 weitergeleitet und dienen im wesentlichen der individuellen Identifizierung der Position der Körpergelenke sowie des Volumens und der Außenabmessungen eines jeden einzelnen Geflügelkörpers, der mittels Förderer 26 in den Bereich der Vorrichtung zur Gewinnung des Filets gelangt. Die ebenfalls in Figur 3 zu sehende Steuerungseinheit 15 meldet nun das Ankommen eines jeden Geflügelkörpers, insbesondere aber die Position der Körpergelenke 6 des jeweiligen Geflügelkörpers an die erste Schabevorrichtung 16. Diese Schabevorrichtung 16 besteht aus einem linken Schabeelement 17 und einem rechten Schabeelement 18. Die Schabelemente 17, 18 sind gegeneinander verschwenkbar angeordnet, so daß sie z. B. mittels eines von der Steuerungseinheit 15 stammenden Signals bezüglich der individuellen Breite des Geflügelkörpers beabstandet werden können. Das linke Schabeelement 17 verfügt über einen linken Sehnenrückhalter 19, der die im Bereich des Körpergelenks befindliche Tendersehne auffinden und zurückhalten soll, damit das Schabelement ungehindert in den Bereich zwischen Knochen und Fleisch gelangen und somit ein Optimum an Ausbeute erzielen kann. Das rechte Schabeelement 18 verfügt über einen rechten Sehnenrückhalter 20, der die entsprechende, gegenüberliegenden Körpergelenk befindliche Tendersehne auffinden soll. im Anschluß an die erste Schabevorrichtung befindet sich eine zweite Schabevorrichtung 21, die im wesentlichen zur Förderrichtung symmetrisch angeordnet eine linke Scheibe 22 und eine rechte Scheibe 23 aufweist, wobei diese Scheiben 22, 23 mittels eines Scheibenantriebs 27, der mittels eines nicht näher dargestellten Treibriemens über einen ebenfalls nicht dargestellten Motor antreibbar ausgestaltet sind. Diese Scheiben 22, 23 sind mittels Scheibenschwenkhebel 28 in der Weise verschieblich, daß sie in dem Moment, in dem die Steuereinheit 15 über die Signalleitungen 24 das Erscheinen der Körpergelenke 6 des Geflügelkörpers im Wirkungsbereich der zweiten Schabevorrichtung meldet, sich die Scheibenumfangsfläche 26 der Scheiben 22, 23 auf das korrespondierende Körpergelenk zu bewegt und auf diesem anliegt. Im Verlauf der durch den Förderer 25 verursachten Bewegung des Geflügelkörpers bewegen sich die Scheiben 22, 23 auf dem korrespondierenden Teil des symmetrischen Gabelbeins 4 auf dessen Gabelbeinkopf 5 zu, um das mit dem Gabelbein 4 verbundene Fleisch zu lösen. Die sich drehenden Scheiben 22, 23 werden nach Erreichen des Gabelbeinkopfes wieder aus dem direkten Bereich des Geflügelkörpers ausgesteuert. In einer speziellen Ausgestaltung sind die Scheiben 22,23, insbesondere im Bereich ihrer Scheibenumfangsfläche 26 stumpf.

In einer anderen alternativen Ausgestaltung gemäß Figur 4 III, ist vorgesehen, daß die bereits weiter oben beschriebenen Schabevorrichtungen 16, 21 in umgekehrter Reihenfolge angeordnet sind, so daß der Geflügelkörper zunächst die Schabevorrichtung 21 und dann die Schabevorrichtung 16 durchläuft, wobei auch hierbei die zusätzliche Alternative denkbar ist, daß zwischen den Schabevorrichtungen 21 und 16 eine weitere Meßvorrichtung angeordnet wird. In einer weiteren alternativen Ausgestaltung ist vorgesehen, daß die Meßvorrichtung 11 ein lichtoptisches Element, z. B. eine Kamera aufweist, die in Verbindung mit einer Prozessoreinheit und einem mathematischen Verfahren, wie beispielsweise der Triangulation, Volumen und Körperdaten, bzw. deren Koordinaten, z. B. den Gabelbeinverlauf, ermittelt.

### Bezugszeichenliste

- 1: Geflügelkörper
- 2: Brustbein
- 3: Rabenbein
- 4: Gabelbein
- 5: Gabelbeinkopf
- 6: Körpergelenk
- 7: Schulterblätter
- 8: Klemmhebel
- 9: Sattel
- 10: Brustbeinplatte
- 11: Meßvorrichtung
- 12: erstes Meßelement
- 13: zweites Meßelement
- 14: drittes Meßelement
- 15: Steuerungseinheit
- 16: erste Schabevorrichtung
- 17: linkes Schabeelement
- 18: rechtes Schabeelement
- 19: linker Sehnenrückhalter
- 20: rechter Sehnenrückhalter
- 21: zweite Schabevorrichtung
- 22: linke Scheibe
- 23: rechte Scheibe
- 24: Signalleitung
- 25: Förderer
- 26: Scheibenumfangsfläche
- 27: Scheibenantrieb
- 28: Scheibenschwenkhebel
- 29: Förderrichtung
- 30: linkes Element
- 31: rechtes Element

## Patentansprüche

1. Vorrichtung zum Entfernen der Filets von den ausgenommenen Körpern extremitätenlosen Geflügels, umfassend wenigstens eine Meßvorrichtung zur Erfassung der individuellen Körpermaße, wenigstens eine Steuerungseinheit und wenigstens eine Schabevorrichtung, wobei die Meßvorrichtung über die Steuerungseinheit mit der wenigstes einen Schabevorrichtung zum Zweck der Kommunikation verbunden ist, und wobei die Meßvorrichtung zur Erfassung von Körpergelenkpunkten und die oder jede Schabevorrichtung als scheibenförmiges Schabeelement ausgebildet ist.

2. Vorrichtung nach Anspruch 1, **dadurch gekennzeichnet, daß** zwei Schabevorrichtungen vorgesehen sind.

3. Vorrichtung nach Anspruch 1 oder 2, **dadurch gekennzeichnet, daß** die oder jede Schabevorrichtung wenigstens zwei scheibenförmige Schabeelemente aufweist.

4. Vorrichtung nach einem der vorhergehenden Ansprüche, **dadurch gekennzeichnet, daß** das oder jedes Schabeelement rotierbar ausgebildet ist.

5. Vorrichtung nach einem der vorhergehenden Ansprüche, **dadurch gekennzeichnet, daß** wenigstens eine Schabevorrichtung ein Element zum Zurückziehen der Tendersehne aufweist.

6. Vorrichtung nach einem der vorhergehenden Ansprüche, **dadurch gekennzeichnet, daß** die scheibenförmigen Schabeelemente derart schwenkbar ausgeführt sind, daß ihre Scheibenumfangsflächen vom Körpergelenk des Geflügelkörpers aus auf dem Gabelbein abrollbar angeordnet sind.

7. Vorrichtung nach einem der vorhergehenden Ansprüche, **dadurch gekennzeichnet, daß** in Förderrichtung vor jeder Schabevorrichtung wenigstens eine Meßvorrichtung angeordnet ist.

8. Verfahren zum Entfernen der Filets von den ausgenommenen Körpern extremitätenlosen Geflügels, umfassend die Schritte:
- Einführen in Vorrichtung zum Entfernen von Filets nach einem der Ansprüche 1 bis 7,
- Erfassen der individuellen Körpermaße durch Aufnehmen körperspezifischer Daten,
- Ansteuern der oder jeder Schabevorrichtung und Aufsetzen von Schabeelementen auf zuvor ermittelte Körpergelenkpunkte,
- anschließendes Anlösen der Filets vom Skelett durch die scheibenförmigen Schabeelemente, und
- endgültiges und vollständiges Lösen der Filets durch nachfolgende Schabewerkzeuge.

9. Verfahren nach Anspruch 8, **dadurch gekennzeichnet, daß** das Erfassen der Körpermaß durch mechanisches Tasten der Körpergelenkpunkte erfolgt.

10. Verfahren nach Anspruch 8 oder 9, **dadurch gekennzeichnet, daß** die beiden Seiten des Geflügelkörpers nacheinander bearbeitet werden.

## Claims

1. Device for removing the breasts from the drawn carcasses of poultry without extremities comprising at least one measuring device for recording the individual carcass dimensions, at least one control unit and at least one scraping device, wherein the measuring device is connected via the control unit to the at least single scraping device for the purpose of communication and wherein the measuring device is constructed to record carcass joint points and the or every scraping device is constructed as a disk-shaped scraping element.

2. Device according to Claim 1, **characterised in that** two scraping devices are provided.

3. Device according to Claim 1 or 2, **characterised in that** the or every scraping device has at least two disk-shaped scraping elements.

4. Device according to one of the preceding claims, **characterised in that** the or every scraping element is of rotatable construction.

5. Device according to one of the preceding claims, **characterised in that** at least one scraping device has an element for pulling back the tender tendon.

6. Device according to one of the preceding claims,
**characterised in that** the disk-shaped scraping elements are designed pivotably in such a way that their peripheral disk surfaces are arranged on the wishbone to roll out from the carcass joint of the poultry carcass.

7. Device according to one of the preceding claims, **characterised in that** at least one measuring device is arranged ahead of each scraping device in the transport direction.

8. Method for removing the breasts from the drawn carcasses of poultry without extremities comprising the steps:
- introduction into the device for removing breasts according to one of Claims 1 to 7,
- recording of the individual carcass dimensions by recording carcass-specific data,
- addressing the or every scraping device and setting up scraping elements on previously determined carcass joint points,
- subsequent initial detachment of the breast from the skeleton by the disk-shaped scraping elements and
- final and complete detachment of the breast by following scraping tools.

9. Method according to Claim 8, **characterised in that** the recording of the size of the carcass ensues by means of mechanical sensing of the carcass joint points.

10. Method according to Claim 8 or 9, **characterised in that** the two sides of the poultry carcass are machined one after the other.

## Revendications

1. Dispositif de retrait des filets des corps vidés de volailles sans extrémités, comportant au moins un dispositif de mesure destiné à déterminer la masse corporelle individuelle, au moins une unité de commande et au moins un dispositif de grattage, le dispositif de mesure étant relié par l'unité de commande à au moins un dispositif de grattage en vue d'établir une communication et le dispositif de mesure étant destiné à détecter des points d'articulation du corps et le dispositif de grattage ou chaque dispositif de grattage étant conformé en élément de grattage en forme de disque.

2. Dispositif selon la revendication 1, **caractérisé en ce qu'**il est prévu deux dispositifs de grattage.

3. Dispositif selon la revendication 1 ou 2, **caractérisé en ce que** le dispositif de grattage ou chaque dispositif de grattage comporte au moins deux éléments de grattage en forme de disque.

4. Dispositif selon l'une des revendications précédentes, **caractérisé en ce que** l'élément de grattage ou chaque élément de grattage est conformé de manière à pouvoir tourner.

5. Dispositif selon l'une des revendications précédentes, **caractérisé en ce que** au moins un dispositif de grattage comporte un élément destiné à retirer les tendons.

6. Dispositif selon l'une des revendications précédentes, **caractérisé en ce que** les éléments de grattage en forme de disque sont réalisés de façon à pouvoir pivoter de sorte que leurs surfaces périphériques de disque sont agencées de façon à pouvoir rouler depuis l'articulation du corps de la volaille sur le bréchet.

7. Dispositif selon l'une des revendications précédentes, **caractérisé en ce que** au moins un dispositif de mesure est agencé en avant de chaque dispositif de grattage par référence au sens de déplacement.

8. Procédé de retrait des filets des corps vidés de volailles sans extrémités, comportant les étapes :
- d'insertion dans le dispositif de retrait de filets selon l'une des revendications 1 à 7,
- de détermination de la masse corporelle individuelle à partir de données reçues spécifiques du corps,
- de commande du dispositif de grattage ou de chaque dispositif de grattage et de mise en place des éléments de grattage sur des points d'articulation du corps détectés précédemment,
- de grattage subséquent des filets du squelette au moyen des éléments de grattage en forme de disque, et
- de détachement final complet des filets au moyen d'outils de grattage placés en aval.

9. Procédé selon la revendication 8, **caractérisé en ce que** la détermination de la masse corporelle est effectuée par exploration mécanique des points d'articulation du corps.

10. Procédé selon la revendication 8 ou 9, **caractérisé en ce que** les deux côtés du corps de volaille sont traités successivement.
